# EUROPEAN PATENT APPLICATION

(11) **EP 4 207 036 A1**
(43) Date of publication of application: **05.07.2023**
(21) Application number: 22153987.7
(22) Date of filing: 28.01.2022
(51) Int. Cl.: G06Q 30/06, G06Q 20/32, G06Q 20/24

(54) **A COMPUTER-IMPLEMENTED METHOD FOR ENABLING PURCHASES RELATED TO AN AUGMENTED REALITY ENVIRONMENT, A COMPUTER READABLE MEDIUM, AN AR DEVICE, AND A SYSTEM FOR ENABLING PURCHASES RELATED TO AN AUGMENTED REALITY ENVIRONMENT**

(30) Priority: 30.12.2021 US 202163295239 P
(71) Applicant: Supertab AG, 6312 Steinhausen (CH)
(72) Inventor: ENE, Cosmin-Gabriel, 8702 Zollikon (CH); ERNI, Marcel, 6312 Steinhausen (CH); KNIGHT, Jesse, Scarborough ME04074 (US)
(74) Representative: Meissner Bolte Partnerschaft mbB

(57) **Abstract**

The present application is directed to a computer-implemented method for enabling purchases related to an augmented reality environment provided by an AR device (110) and/or an AR backend (120), the AR device (110) having at least one display (111) and at least one sensor. The method comprises:
- visualizing a purchase incentive (220) in the augmented reality environment;
- obtaining selection data (315) based on first signals (310) from the at least one sensor, the selection data (315) being indicative of an item (210) selected for purchase;
- obtaining reaction data (325) based on second signals (320) from the at least one sensor;
- evaluating the reaction data (325) to either confirm or cancel the purchase;
- assigning pricing data (330) and payment data (335) to the selected item (210);
- if the purchase is confirmed, transmitting pricing data (330) and/or payment data (335) to a payment system (140).

## Description

The present application is directed to a computer-implemented method for enabling purchases related to an augmented reality environment, a computer readable medium, an AR device, and a system for enabling purchases related to an augmented reality environment.

Virtual reality (VR) and augmented reality (AR) have undergone substantial development over the last decade. Virtual reality enables a user to experience and interact with a computer-generated, virtual environment which can be similar or completely different from the real world. A central feature of virtual reality is that a feeling of immersion is evoked in the user, where immersion can be defined as the user's perception of being physically present in the virtual environment. In augmented reality, the user's perception of the real world is enhanced by computer-generated, virtual content. Therefore, both VR and AR provide the user with a virtual environment. However, VR and AR differ in the sense that the virtual environment in VR replaces the real world completely in the user's perception, while the virtual environment in AR typically incorporates elements of the real world perceived by the user.

The application areas of virtual reality and augmented reality are widely distributed and include, for example, entertainment, gaming, business and education.

Typically, VR and AR applications require specialized hardware having one or more input and output devices that enable the user to perceive and interact with the virtual environment. Therefore, the number and type of input and output devices determine the interaction possibilities for the user and thus are crucial for the immersion.

Within the present description, the term AR device is used for any type of hardware configured to present the virtual environment of an AR application to the user and to enable the user to interact with said virtual environment. The virtual environment may be additionally provided by a backend component which is called AR backend herein. For example, the AR backend may be a server performing resource-intensive computation and providing the results to the AR device. The AR backend may be integrated into the AR device or be an external component communicatively coupled with the AR device.

Commonly, AR devices are worn on the user's head (head-mounted devices, HMD) such that the AR device follows the user's head movements. Common forms of head-mounted devices include eyeglasses, goggles, full or partial helmets and headsets. Typically, these AR devices have one or more input devises with at least one sensor (e.g., eye tracker, motion sensor, gyroscopic sensor, inertial measurement unit, forward-facing camera, tactile sensor) which enable to detect motion of the user's head, gaze, hands, fingers, arms and/or pointing devices. Moreover, AR devices typically have one or more output devices (e.g. display, speaker, force feedback actuators) enabling the user to perceive the virtual environment.

In many AR applications, users are provided with opportunities to purchase items in the midst of the augmented reality environment. In particular, the augmented reality environment may include a virtual marketplace offering several items for purchase. These items can be of various type. The item can be a physical good and/or service offered within the virtual world, but delivered/provided in the real world (e.g., when the augmented reality environment provides a virtual model of a real-world store). The purchase can also be related to the rental of that item.

Alternatively, the item can be digital content. As used herein, digital content includes, for example, videos, video games, images, non-fungible tokens (NFTs), podcasts, publications, music, and unique to the user (or non-unique) digital images to be displayed in the virtual environment including virtual clothing, outerwear, headwear, footwear, and jewelry, with or without associated images or avatars of the user, as well as any content communicated in a digital form. The purchase of digital content may alternatively include gaining access to digital content from a local or remote content server for a predetermined or unlimited period of time period.

For the user of the augmented reality application, it is very desirable to make purchases without significant interruption of his/her augmented reality experience, in particular for confirmation of the purchase and/or providing payment data. This aspect is particularly relevant when items are offered at small price (e.g., between 0.01 EUR and 1.00 EUR). The payment for such a purchase is called a micropayment. For a single micropayment, users are typically not willing to register or to input payment data, since the effort and the benefit are not in a reasonable proportion.

On the other side, an important aspect is that users retains full control over purchase decisions in virtual environments. Additionally, most users would like to ensure that their data, in particular payment data such as credit card numbers, are kept confidential. In fact, there might be cases where a user is not willing to provide the AR application with his/her payment data. In this case, the AR device and/or the AR backend have no access or not full access to an interface of a payment system associated with the user.

It is therefore an object of the present invention to provide a computer-implemented method and a corresponding system for enabling purchases which are related to an augmented reality environment. Moreover, it is an object of the present invention to implement the process of purchasing an item into the augmented reality experience in a way that the user can make the purchase in an intuitive and rapid way. Additionally, it is an object of the present invention to enable said purchases even if the AR device and/or the AR backend providing the augmented reality environment have no or limited access to an interface of a payment system.

The objects of the present invention are solved by the computer-implemented methods of claims 1 and 8, the computer-readable medium of claim 12, the AR device of claim 13 and the system of claim 14.

In particular, the object of the present invention is solved by a computer-implemented method for enabling purchases related to an augmented reality environment. Here, the augmented reality environment is provided by an AR device and/or an AR backend, the AR device having at least one display and at least one sensor, preferably an eye tracker, position sensor and/or inertial measurement unit. The method comprises the steps of:
- visualizing a purchase incentive in the augmented reality environment, in particular by using the display;
- obtaining selection data based on first signals from the at least one sensor, the selection data being indicative of an item, in particular a virtual content item and/or a real-world item, selected for purchase;
- obtaining reaction data based on second signals from the at least one sensor, the second signals being acquired continuously during a time interval;
- evaluating the reaction data to either confirm or cancel the purchase of the selected item;
- assigning pricing data and payment data to the selected item, in particular by performing a database look-up;
- if the purchase is confirmed, transmitting pricing data and/or payment data to a payment system to initiate a payment of the selected item.

A core aspect of the invention is that the user can express and confirm or cancel his/her purchase intention while being in the midst of the augmented reality experience. This is achieved by acquiring and processing several signals from the at least one sensor of the AR device. Therefore, the method allows to choose the user actions which are required to select an item for purchase and/or to confirm/cancel the purchase similar or same to those actions that the user performs to interact with the augmented reality environment (e.g., gestures and movements).

The purchase incentive visualized in the augmented reality environment draws the user's attention to the fact that a certain item is available for purchase. In a simple case, the purchase incentive can be a visualization of the item itself. Alternatively, the purchase incentive can be a purchase icon (e.g., a shopping cart symbol displayed in the vicinity of the item) or a dedicated area in the augmented reality environment (e.g., a virtual checkout area).

According to the method, the user's intention whether to purchase the item is acquired and confirmed in multiple stages.

In a first stage, selection data are obtained which are indicative of the item selected by the user for potential purchase. The selection data are based on first signals from the at least one sensor of the AR device. In particular, the first signals may be sensor signals of an eye tracker of the AR device and be indicative of a user's gaze at the item in the augmented reality environment.

In a second stage, reaction data are obtained based on second signals from the at least one sensor. It is preferred, but not mandatory, that the second signals are acquired continuously during a time interval. For example, the second signals may be obtained from the eye tracker and indicate that the user continues to gaze at the selected item for a predetermined time. Alternatively, the second signals may be obtained from an inertial measurement unit and indicate that the user stays in a dedicated area (e.g., checkout area) for a predetermined time.

In a third stage, the reaction data are evaluated to either confirm or cancel the purchase of the selected item. The purchase may be confirmed if a significant large fraction (e.g., 80% or more) of the reaction data satisfy a desired property.

Next, pricing data and payment data are assigned to the selected item. The pricing data may comprise a price associated with the item. The payment data may comprise a recipient of the payment as well as further payment modalities (e.g., payment method). The step of assigning pricing data and/or payment data may include performing a database look-up. In particular, it may be required to request the actual price of the selected item in a database on a remote server, e.g., the product database of a merchant offering the selected item.

If evaluating the reaction data yields in a confirmation of the purchase, pricing data and/or payment data are transmitted to a payment system to initiate a payment of the selected item. The payment system may provide the user to pay by, for example, Apple Pay, Google Pay, fiat currency, cryptocurrency, by permitting third parties to pay the balance, by applying accrued credit against such balance, or via an electronic wallet application activated on a suitable device such as an associated mobile device of the user.

The initiation of the payment may trigger one or more actions performed by technical systems in the real world, wherein the actions may prepare the delivery and/or the providing of the purchased item.

In one embodiment, in the evaluation of the reaction data, the purchase can be confirmed if at least a part of the reaction data is indicative of
- a user's gaze at a region in the augmented reality environment, preferably indicated by sensor signals of the eye tracker;
- a user's position in a region in the augmented reality environment, preferable indicated by sensor signals of the position sensor and/or the inertial measurement unit; and/or
- a predetermined number of nods by the user, preferably indicated by sensor signals of the inertial measurement unit.

In particular, the purchase can be confirmed if at least a major fraction (e.g., above 50%, preferably above 75%) of the reaction data is indicative of said events.

In one embodiment, the purchase can be cancelled if at least a part of the reaction data is indicative of a predetermined number of headshakes by the user, preferably indicated by sensor signals of the inertial measurement unit.

The latter two embodiments enable the user to confirm or cancel the purchase in an intuitive and convenient way. As necessary condition for detecting a nod by the user, it is preferred that a movement of the user's head within a predetermined range of vertical angles is detected. Similarly, as necessary condition for detecting a head shake by the user, it is preferred that a movement of the user's head within a predetermined range of horizontal angles is detected.

In one embodiment, the method further comprises the step of
- visualizing a time progression during the time interval in the augmented reality environment.

In one embodiment, the time progression can be visualized by means of a progress bar, a countdown timer, a color coding (e.g., from green to orange to red) and/or a clock.

For implementing the visualization of the time progression, in one embodiment, the method may further comprise the steps of:
- storing a start time of the time interval in reaction to or triggered by at least one of the first signals;
- determining an end time of the time interval, preferably such that the difference between the end time and the start time equals a predetermined constant, preferably less than or equal to 5 sec.

For example, the time interval may be defined by a start time and an end time. The start time can be triggered by a first signal indicating the user's gaze at the purchase indicator. The end time can be determined such that the end time is t seconds later than the start time, where t is any predetermined constant, preferably less than or equal to 5, e.g., 3.

In one embodiment, for visualizing the time progression, the method may comprise one or more of the following steps:
- Displaying a time indicator at the start time of the time interval;
- Updating the time indicator according to a progression of time;
- Removing the time indicator at the end time of the time interval.

Displaying the time indicator is preferably performed using the display. To update the time indicator according to the time, the time is preferably obtained by a time unit of the AR device.

Further embodiments of the method enable the user to consume the purchased item without triggering a payment immediately.

In one embodiment, the payment system may be adapted to perform a payment transaction from a user such that payment is only required if the total cost of an item cost, according to the pricing data, and a total of unsettled prior obligations associated with the user exceeds a threshold amount, e.g., 5 EUR.

Therefore, the user is enabled to consume immediately, but to pay at a later point. More precisely, the user can accumulate several micropayments and, if the total amount of unsettled obligations exceeds the threshold amount, pay for the corresponding purchases. This makes purchases of items with small price more attractive to the user, since the effort-benefit-ratio of the transaction may be improved. Moreover, the technical resources required for the payment transaction may be used more efficiently, since not every purchase triggers a payment transaction. Such a payment system is described, for example, in the European Patent EP2476087.

In one embodiment, a transaction status indicator is displayed in the augmented reality environment, wherein the transaction status indicator indicates at least one of:
- the pricing data of the selected item;
- the threshold amount before the payment system requires a payment;
- unsettled prior obligations, if existing.

By this embodiment, the user is provided with information which may be useful for his/her purchase decision. In particular, the transaction status indicator may be configured such that the user may read off whether the current purchase triggers a payment transaction.

The object of the present invention is further solved by a computer-implemented method, in particular according to any of the methods described above, for enabling purchases related to an augmented reality environment provided by an AR device and/or an AR backend. Here, the AR device has at least one display and at least one sensor, preferably an eye tracker, position sensor and/or inertial measurement unit, and the method comprises the steps of:
- receiving, by a mobile device, a trigger signal, in particular an audio signal, the trigger signal being indicative of a user's purchase intention;
- identifying, by the mobile device, at least one item related to the purchase intention, in particular by sending at least one request to the AR device and/or the AR backend;
- assigning pricing data and payment data to the identified item, in particular by performing a database look-up;
- transmitting, by the mobile device, pricing data and/or payment data to a payment system to initiate a payment of the selected item.

The mobile device may be a smart phone or a smart speaker, for example. In particular, the mobile device may be located in the vicinity of the user, such that the mobile device may receive user's voice commands.

A core aspect of this embodiment is that a mobile device, rather than the AR device or the AR backend, is used for communication with the payment system. In particular, this embodiment regards a user's desire not to provide payment data to the AR device / AR backend, or situations where a preferred payment system is not supported by the AR device / AR backend; instead, the user prefers to use one of (possibly multiple) payment methods set up on his/her mobile device.

In addition, this embodiment enables a two-factor-authentication for purchases related to the augmented reality environment. Here, the AR device is required to initiate a purchase and therefore acts as first component of authentication. Completing the purchase, however, requires an action performed by the user's mobile device. Therefore, the user's mobile device acts as second component of authentication. This may improve the security of the purchase for the user. Also, the first authentication can be seen in an authentication process that the user performs to access the virtual reality world and/or that is required when purchasing is initiated. Generally, the invention allows a multifactor authentication for purchasing in an augmented reality environment.

The mobile device may also provide a proof of a property regarding the user and/or the user account, wherein the property is required to complete the purchase process. In particular, the mobile device may provide a proof of the user's age, the ability to pay (i.e., providing at least one valid payment method) etc.

It should be noted that uniquely mapping the respective device to a user (account) is possible for both the AR device (e.g., using the MAC address) and the mobile device (e.g., using the IMSI code and/or the MAC address).

Moreover, the described embodiment enables the user to use a trustworthy and/or secured communication channel, established between the mobile device and the payment system, rather than the possibly untrustworthy communication channel between the AR device and the payment system. In particular, the mobile device may support communication with the payment system via secured protocols (e.g., SSL, TLS) not supported by the AR device. Therefore, using the mobile device for communication with the payment system may improve the security of payment processing for the user.

According to the above-described method, the mobile device receives a trigger signal indicative of a user's purchase intention. For example, the trigger signal may be the voice command "Buy this item" of the user.

In a following step, the mobile device identifies at least one item related to the purchase intention. This step may comprise sending at least one request to the AR device and/or to the AR backend.

If an item related to the purchase intention has been identified, pricing data and payment data are assigned to the identified item. The pricing data may comprise a price associated with the item. The payment data may comprise a recipient of the payment as well as further payment modalities (e.g., payment method). The step of assigning pricing data and payment data may include performing a database look-up. In particular, it may be required to request the current price of the selected item in a database on a remote server, e.g., the product database of a merchant offering the selected item.

Finally, pricing data and/or payment data are transmitted by the mobile device to a payment system to initiate a payment of the selected item.

In one embodiment, the identifying of the at least one item related to the purchase intention comprises:
- sending, by the mobile device, a request to the AR device and/or to the AR backend, comprising identification data and data related to the purchase intention;
- relating, by the AR device and/or the AR backend, the request to an avatar in the augmented reality environment, the avatar being associated with the identification data;
- determining, by the AR device and/or the AR backend, at least one item using the data related to the purchase information and at least one property of the avatar.

The identification data may be an identifier of the user of the mobile device (e.g., a user account name) and/or of the mobile device itself (e.g., the MAC address). In particular, the identification data should be qualified to relate the user of the mobile device to the user's representation in the augmented reality environment (herein called avatar).

From another perspective, the identification data and the (properties of the) avatar can be seen as components of a two-factor-authentication. The purchase, initiated by the avatar in the augmented reality environment, can only be completed if the identification data are provided by the mobile device. Therefore, in addition to the purchase intention acquired in the virtual world, a property of a physical object (mobile device) controlled by the user is required to complete the purchase. This may improve the security of purchases for the user.

The data related to the purchase intention may be any data descriptive of the received trigger signal (e.g., the result of a speech recognition based on a received voice command).

In one embodiment, the at least one property of the avatar may correspond to
- a user's gaze at a region in the augmented reality environment, preferably indicated by sensor signals of an eye tracker; and/or
- a user's position in a region in the augmented reality environment, preferable indicated by sensor signals of the position sensor and/or inertial measurement unit.

In particular, the property of the avatar may enable to determine, in combination with the data related to the purchase intention, an item related to the user's purchase intention. It should be noted that the trigger signal (resp. the data related to the purchase intention) itself may not be sufficient for this purpose. For example, the user's voice command "Buy this item" without context information is clearly not sufficient to determine which item the user wants to purchase. However, together with the user's gaze (more specifically, the gaze of the user's avatar) to an item in the augmented reality environment, the item of interest may be identified.

In one embodiment, the trigger signal is a voice signal and the method further comprises the step of verifying authenticity of the voice signal. This can prevent unauthorized persons from initiating a purchase via voice command.

In one embodiment, the trigger signal is a voice signal comprising a trigger phrase and/or an alias of the mobile device. This can help to address the desired mobile device if more than one mobile device is responsive to voice commands.

In one embodiment, the method further comprises the step of selecting, by the mobile device, a payment system out of a plurality of payment systems. The selection can be made according to the pricing data and/or payment data, in particular to select a payment system suitable for the current purchase.

In one embodiment, the method further comprises the step of:
- transmitting description data related to the identified item by the mobile device to the AR device;
- visualizing the description data by the AR device, in particular by using the display;
- evaluating, by the AR device, reaction data based on third signals from the at least one sensor to confirm or cancel the purchase of the selected item.

According to this embodiment, the user is enabled to verify if the item identified by the mobile device matches the subject of his/her actual purchase intention. The evaluation of the reaction data can be implemented as described above in connection with the method according to claim 1, in particular by detecting the user's gaze, head nods, etc.

The object of the present invention is further solved by a computer readable medium storing instructions that when executed by at least one processor cause the at least one processor to implement a method as described above.

Moreover, the object of the present invention is solved by an AR device comprising a computer readable medium as described above.

The advantages of the above-mentioned computer readable medium and of the AR device are similar or equal to the aforementioned methods.

The object of the present invention is further solved by a system configured to implement any one of the above methods.

In particular, the object is solved by a system enabling purchases related to an augmented reality environment, the system comprising:
- an AR device having at least one display and at least one sensor, preferably an eye tracker, position sensor and/or inertial measurement unit;
- an AR backend; and
- at least one payment system.

Here, an augmented reality environment is provided by the AR device and/or the AR backend, wherein the AR device is configured to visualize a purchase incentive, in particular by using the display, in the augmented reality environment. Moreover, the AR backend is configured to at least one of the following:
- obtaining selection data based on first signals from the at least one sensor, the selection data being indicative of an item selected for purchase;
- obtaining reaction data based on second signals from the at least one sensor, the second signals being acquired continuously during a time interval;
- evaluating the reaction data to either confirm or cancel the purchase of the selected item;
- assigning pricing data and payment data to the selected item, in particular by performing a database look-up;
- if the purchase is confirmed, transmitting pricing data and/or payment data to a payment system to initiate a payment of the selected item.

In one embodiment, the system further comprises a mobile device, in particular a smartphone or a smart speaker, configured to at least one of the following:
- receiving a trigger signal, in particular a voice signal, the trigger signal being indicative of a user's purchase intention;
- identifying at least one item related to the purchase intention, in particular by sending at least one request to the AR device and/or the AR backend;
- assigning pricing data and payment data to the identified item, in particular by performing a database look-up;
- transmitting pricing data and/or payment data to a payment system to initiate a payment of the selected item.

The benefits and advantages of the aforementioned system are equal or similar to the advantages of the above-mentioned methods.

Further embodiments are indicated by the dependent claims.

It is explicitly pointed out that all described aspects can be combined with each other as desired. In particular, the aspects described with respect to devices and systems are also disclosed for the corresponding methods and vice versa.

In the following, embodiments of the invention are described with respect to the figures, wherein
- Fig. 1: shows a head-mountable AR device;
- Fig. 2: shows a virtual clothing store provided in an augmented reality environment;
- Fig. 3: shows a flow diagram describing a method for enabling purchases related to an augmented reality environment;
- Fig. 4: shows a visualization of a time progression;
- Fig. 5: shows a method for enabling purchases related to the augmented reality environment according to a second embodiment and a system for implementing the method;
- Fig 6 to Fig. 15: depict representative virtual images created by HMD and visible to a user wearing such HMD in accordance with further aspects of the present disclosure

In the following description, same reference numerals are used for same parts and parts with the same effect.

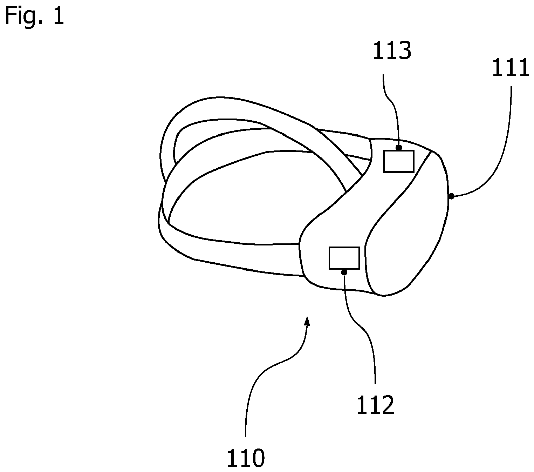

Figure 1 shows the AR device 110 together with its components. The AR device 110 can be mounted on the head of a user and comprises a display 111, an eye tracker 112, and an inertial measurement unit 113. The eye tracker 112 is configured to provide sensor signals indicative of the user's line of gaze. The inertial measurement unit 113 comprise accelerometers and gyroscopes and is configured to provide sensor signals indicative of the user's position and/or angular velocity.

It should be noted that typical AR devices comprise various further internal components (e.g., CPU, storage unit, network unit) and sensors. However, the AR device 100 from Figure 1 comprises only a subset of these units for sake of simplicity.

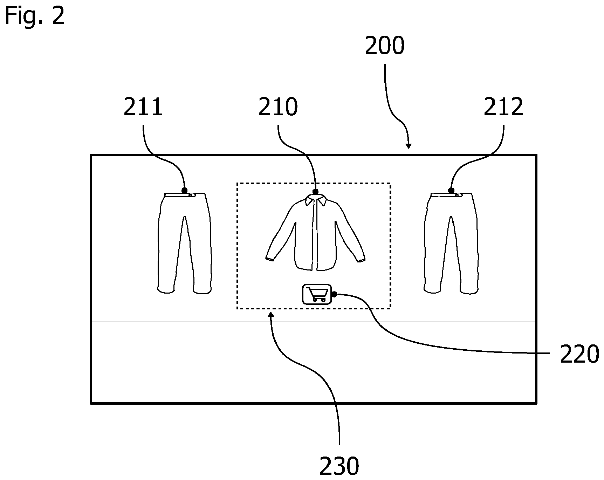

Figure 2 shows an augmented reality environment provided by the AR device 100 described in connection with Figure 1. The augmented reality environment enables a user to navigate through the virtual clothing store 200 and to view several clothing items which may be available for purchase. In the present case, a shirt 210 and trousers 211, 212 hang on a wall of the virtual clothing store 200. A shopping cart symbol 220 is displayed below the shirt 210, indicating that the shirt 210 is available for purchase.

Although the user is enabled to navigate freely through the virtual clothing store 200 as depicted in Figure 2, his/her current view is restricted to the field of view 230 (see dashed rectangle in Figure 2). In other words, the user gazes at the shirt 210 and the corresponding shopping cart symbol 220.

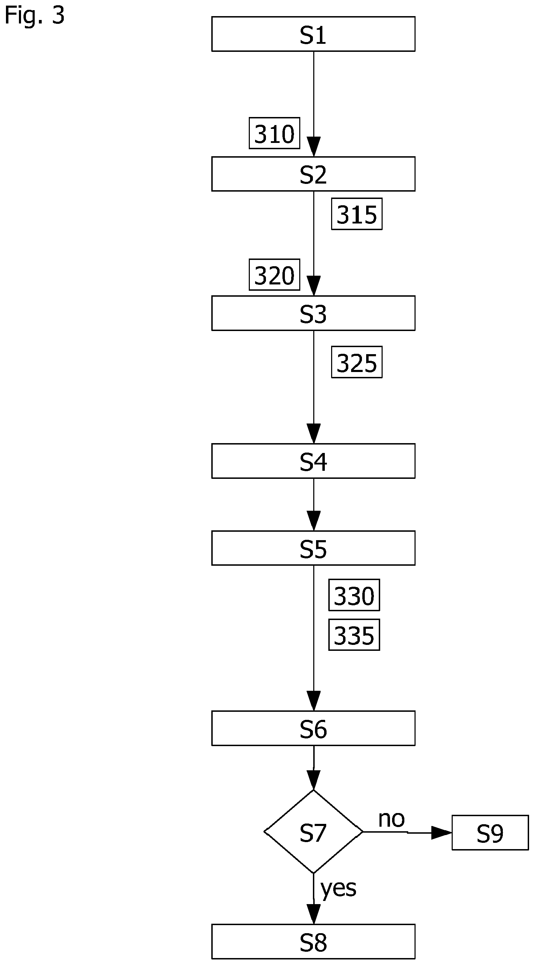

Figure 3 shows a flow diagram describing a method for enabling the purchase of the shirt 210 from the augmented reality environment described in connection with Figures 1 and 2.

In the initiation step S1, the shopping cart symbol 220 is visualized as purchase incentive in the augmented reality environment by using the display 111. In this way, the user gets informed about the possibility of purchasing the shirt 210.

Next, in the first analysis step S2, first signals 310 of the eye tracker 112 are analyzed by the AR device 110. In this embodiment, the first signals 310 indicate that the user's gaze is fixed on the shirt 210 (see field of view 210 in Figure 2). By this behavior, the user expresses his interest in purchasing the shirt 210. As a result of the first analysis step S2, selection data 315 are obtained which are indicative of the item selected for potential purchase, that is, the shirt 210.

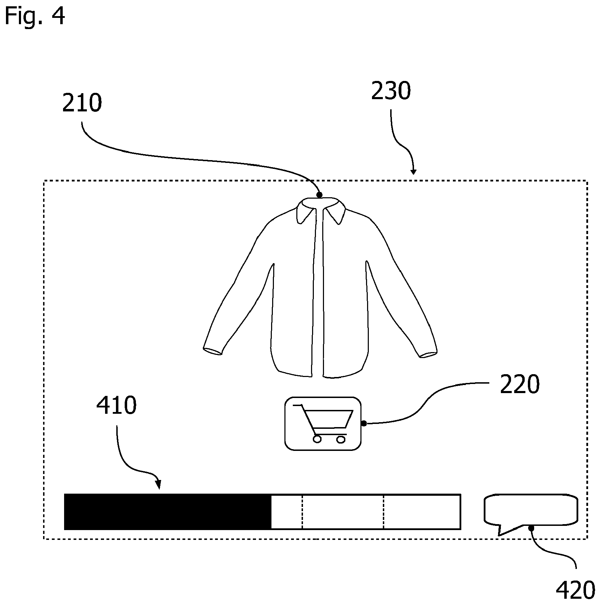

In the subsequent second analysis step S3, second signals 320 from the eye tracker 112 are analyzed by the AR device 110. The second signals 320 indicate the user's gaze during a time interval of 5 seconds, wherein the time interval is triggered by the event that the user gazes at the shirt 310 for the first time, according to the first signals 310. During the time interval, the progression of time is visualized using the display 111 in the augmented reality environment. This process will be described below in connection with Figure 4. Visualizing the time progression allows the user to see how much longer he/she has to gaze at the shirt 210 in order to confirm the purchase. As a result, the reaction data 325 are obtained. According to this embodiment, the reaction data 325 include snapshots of the user's field of view during the time interval.

Next, in the evaluation step S4, the reaction data 325 are evaluated by the AR device 110 to either confirm or cancel the purchase of the shirt 210. In this embodiment, the purchase is confirmed since a major fraction of the snapshots from the reaction data 325 contain the shirt 210 and no further item available for purchase (e.g., the trousers next to the shirt 210 in Figure 2). In this context, the term "major" can be defined as 50-100%, preferably 80-100%. Alternatively or additionally, the purchase may be cancelled if the reaction data are indicative of a deviation of the user's line of gaze from a reference line at least by a predetermined angle, wherein the reference line is directed to the selected item (shirt 210).

Now that it has been detected and confirmed that the shirt 210 shall be purchased, further information required for the payment transaction is acquired in the data collection step S5 by the AR device 110. In particular, the actual price of the shirt 210 is determined by sending a request to a product database of a merchant offering the shirt 210. The price of the shirt 210 is stored as pricing data 330. Moreover, payment data 335 indicating the recipient of the payment are created.

In the data assignment step S6, pricing data 330 and payment data 335 are assigned to the shirt 210 in order to prepare transaction of the purchase.

In the checking step S7, it is checked by the AR device 110 whether the purchase has been confirmed in the evaluation step S4. If this is the case, the payment transmission step S8 is performed, otherwise, the purchase process is terminated (termination step S9). According to the described embodiment, the purchase has been confirmed and thus the payment transmission step S8 is executed.

In the payment transmission step S8, the pricing data 330 and the payment data 335 are transmitted from the AR device 110 to a payment system. Based on the received data, the payment system performs the further steps required to process the payment (e.g., charging a credit card).

Figure 4 shows the visualization of the time progression during the second analysis step S2 from the method described in Figure 3. In this embodiment, the time progression is visualized by a horizontal progress bar 410 displayed at the lower edge of the user's field of view 230. The progress bar 410 is divided into segments of equal length. The expired time is visualized by a black bar, whose length corresponds to the amount of time expired since the time interval has been triggered. Therefore, the progress bar 410 of Figure 4 indicates that approximately half of the time has expired.

Additionally, Figure 4 shows an instruction text field 420 providing instructions to the user, e.g. "Continue fixing your gaze on the item to confirm the purchase".

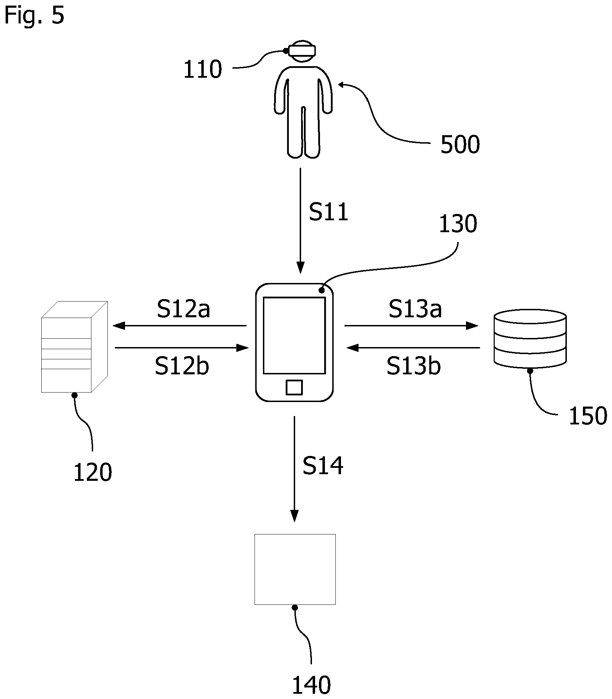

Figure 5 shows, according to a second embodiment, a method for enabling purchases related to the augmented reality environment described in connection with Figures 1 to 4. Moreover, Figure 5 shows a system for implementing the method.

The system of Figure 5 comprises the AR device 110 worn on the head of the user 500 and the AR backend 120. The AR device 110 and the AR backend 120 are communicatively coupled and provide the augmented reality environment to the user 500. Further components of the system are the smart phone 130 of the user 500, a product database 150, and a payment system 140. The smart phone 130 is communicatively coupled with the AR backend 120, with the product database 150, and with the payment system 140. Moreover, the smart phone 130 is configured to receive voice commands from the user 500.

It should be noted that in this embodiment, neither the AR device 110 nor the AR backend 120 can directly access the payment system 140. Therefore, the method described in the following regards the case where the communication with the payment system is performed by the smart phone 130, unlike the method described in connection with Figure 3.

In the triggering step S11, the smart phone 130 receives a voice command "Buy this shirt!" from the user 500.

In the determination request S12a, the smart phone 130 sends a request to the AR backend 120 in order to determine the item which the user 500 intents to purchase. As part of the request, the smart phone 130 sends a speech-processed version of the received voice command as well as an identifier of the smart phone 120.

Using the received identifier, the AR backend 120 relates the request to the user 500 and to an avatar in the augmented reality environment associated with the user 500. Since the avatar is located in the virtual clothing store 200 and the user's gaze is directed to the shirt 210 (see Figure 2), the shirt 210 is identified as subject of the user's purchase intention.

Consequently, in the determination response step S12b, data being descriptive of the shirt 210 is transmitted from the AR backend 120 to the smart phone 130.

Therefore, as an intermediate result, the smart phone 130 has related the user's voice command "Buy this shirt!" to the shirt 210 by requesting the AR backend 120.

In the look-up request S13a, the smart phone 130 sends a request to the product database 130 to request pricing data 330 and payment data 335 of the shirt 210. These data are returned in the look-up response step S13b.

Finally, in the transaction step S14, the pricing data 330 and payment data 335 are transmitted by the smart phone 130 to the payment system 140. Based on the received data, the payment system 140 performs the further steps required to process the payment.

The person skilled in the art is well aware that various modifications to the above described embodiments are possible without deviating from the core of the present invention.

Although the present invention has been described within the context of augmented reality systems, it should be clear that the described techniques and solutions can be applied to virtual reality systems and settings as well.

The embodiment of Figure 5 can be enhanced in that after the smart phone has identified an item related to the user's purchase intention, descriptive data about the item are transmitted to the AR device. The AR device then visualizes the identified item and prompts the user to confirm purchase of one item. The user's confirmation may be acquired as described in connection with the embodiment of Figure 3. Also, the AR backend may return more than one item related to the user's purchase intention (e.g., if the request is ambiguous). In this case, a further selection / confirmation step by the user is necessary and can be implemented in a similar way.

Moreover, the embodiment of Figure 5 can be modified in a way the smart phone (at least partially) identifies the item to be purchased based on the received trigger signal. In particular, when receiving the voice signal "Buy this shirt!", the smart phone may detect that the user's purchase intention relates to a clothing item.

In another embodiment based on Figure 5, the trigger signal comprises a reference identifier that enables the smart phone to (at least partially) identify the item. In particular, the reference identifier may be a product number and/or may be visualized to the user in the augmented reality environment by using the display of the AR device.

Furthermore, while the embodiments described above involve only a single payment system, it should be clear that the present invention allows to integrate multiple payment systems. This way, different payment methods (e.g., credit card, cryptocurrency) may be offered by different payment systems and one of them can be chosen by the user. Alternatively, this decision may be made by the AR device / AR backend and/or the mobile device, preferably depending on the respective purchase.

For simplicity, in the above embodiment, no further actions are triggered to prepare the delivery and/or the providing of the purchased item. However, in some embodiments, such actions will be performed by technical systems in the real world and will be triggered by the initiation of the payment. Examples of such actions include:
- fetching the purchased item, in particular by a robot in an automated warehouse;
- producing and/or configuring, in particular by a production machine, the purchased item, in particular according to a user specification;
- transferring (purchased) digital content from a server to a mobile device and/or storing the digital content on the mobile device.

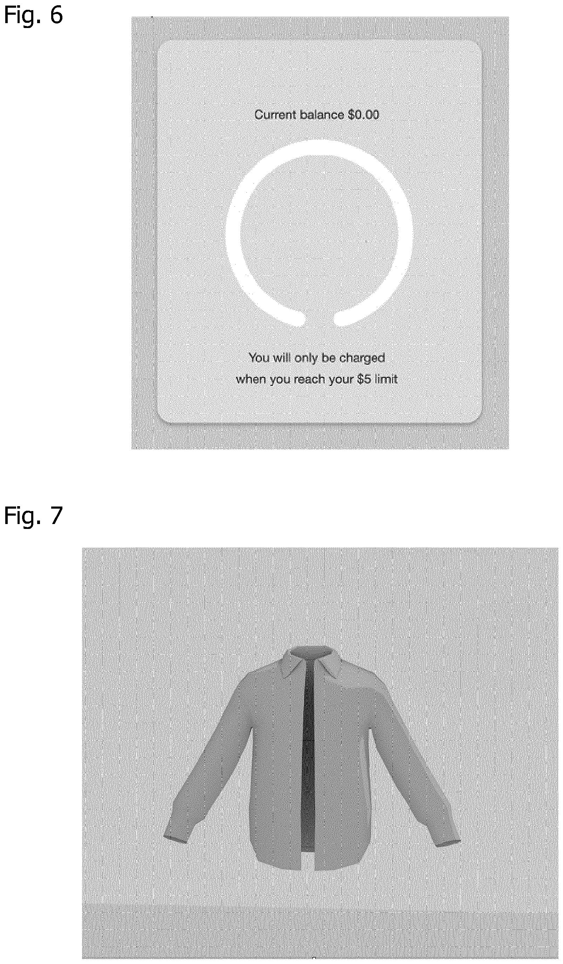

In the following, further aspects of the present disclosure are explained with respect to Figures 6 to 15.

In accordance with the present disclosure, the inventive method begins with an action by the user that indicates the selection of a real or virtual object in the virtual- or augmented-reality, or holographic environment for a potential purchase or rental transaction. Such indication and selection may be performed, for example, by means of at least one of a user's continuous gaze for a predetermined period of time within a region of the item to be selected, signals associated with a pointing device, detected predetermined head motion, hand, finger and/or arm gesture. It should be readily understood that the HMD described herein may be a variety of forms including without limitations, eyeglasses, goggles, full or partial helmets or other forms of head gear, having appropriate sensors for making and/or detecting the selection including, but not limited to, for example, forward-facing camera(s), motion and/or gyroscopic sensors in the HMD or external devices associated with the HMD for detecting motion of wearer's head, hands, fingers, arms and/or pointing devices, and cameras and/or sensors for detecting a wearer's gaze.

The potential transaction may be for the purchase of goods and/or services, or rental of same for a predetermined time period including without limitation physical items and digital content. As used herein, digital content includes, for example, videos, video games, images, non-fungible tokens (NFTs), podcasts, publications, music, and unique to the user (or non-unique) digital images to displayed in the virtual environment including virtual clothing, outerwear, headwear, footwear, and jewelry, with or without associated images or avatars of the user, as well as any content communicated in a digital form. In addition, such potential transaction may alternatively be to gain access to digital content from a local or remote content server for a predetermined or unlimited period of time period.

In response to this purchase indication, a transaction management software module causes the HMD to render an advantageous multifunction virtual tool, referred to herein as the "virtual transaction management widget" that is visible to the user. One aspect of the rendered virtual transaction management widget is to preferably provide indications of: (a) a cost of the selected item; (b) a predetermined maximum threshold amount available to be applied to a deferred payment obligation before triggering a payment settlement requirement; and (c) any prior unsettled payment obligations. The transaction management widget tool may optionally further display an accrued credit balance as further described herein.

After presentation of the transaction management widget to the user, a second action by the user is detected, which directs a next stage of the transaction. For example, detection of a predetermined number of head shakes or nods by the user within a predetermined horizontal or vertical angle range over a predetermined period of time in the case that an adequate amount of deferred payment obligation is available to be applied to the purchase may signal the user's intent to proceed with the purchase. Alternatively, the user's intent to proceed may, for example, be signaled by a gaze movement toward an edge of a field of view of the user (for example, a corner of the field of view that displays a shopping cart for this purpose) or a virtual icon in the user's field of view, blinking eyes a preset number of times within a predetermined time period, another predetermined head, hand, finger and/or arm gesture, eye movement or voice command. Such action and interactions by the user may alternatively indicate that a purchase is not intended, or that a purchase just previously made should be undone (the latter action may for example, be made in response to information appearing in or near the transaction management widget that queries whether the purchase is intended to be undone).

In the case of voice commands, an audio unit in the HMD or mobile device may be operative to recognize a voice signal that comprises one or more of a trigger phrase (e.g., "LATERPAY this item") and/or an alias of the mobile device. Prior to recognizing any trigger system, the audio unit may preferably be operative to authenticate/verify the voice signal as authorized by the user.

In case of either of a transaction that is completed or a transaction that is undone, additional information may preferably appear in or near the transaction management widget to confirm that the transaction has been made or has been undone. In a case where communication with the payment system is not available (for example, while the user is playing an augmented reality game offline), the transaction management widget may indicate that a deferred payment purchase is pending until such time as a purchase request has been transmitted to and been approved by the payment system (perhaps only momentarily in the case where communications with the payment system are simply delayed or interrupted). Alternatively, the request may be postponed by the augmented reality system, for example, in situations where the user is deemed to be in a time-sensitive transaction state (for example, making the purchase during a "heat of battle" state in a gaming application).

Once the transaction has been completed, the transaction management widget is preferably updated to indicate the new balance of unsettled deferred payment obligations. When the user reaches a total amount of deferred payment transaction(s) that reaches or exceeds a threshold (for example, a $5.00 threshold for payment transactions), the user may preferably be presented with a transaction management widget indicating that the threshold has been reached, and be provided with access to the payment system through the transaction management widget for the purpose of settling all or a portion of the deferred payment obligation. The threshold may be fixed, or may provide some flexibility to the user (for example, requesting partial settlement when deferred payments total 80% of the threshold, or allowing for an overspend above the threshold on the basis of the user's payment history).

The payment system may provide the user with more than one payment option for this settlement including, for example, paying either by credit card, by Apple Pay, Google Pay, fiat currency, cryptocurrency, permitting third parties to pay the balance, applying accrued credit against such balance, or via an electronic wallet application activated on a suitable device such as an associated mobile device of the user. Alternatively, if the user is unable to carry out the settlement at the requested time, the payment purchase may be made by alternate means (for example, via the credit balance in the wallet application or by permitting third parties to pay the balance). As another alternative, the deferred payment approach may be engaged secondarily only when payment is unavailable via the wallet or other payment application.

Alternatively, the system may allow for the threshold amount to be paid or have been pre-paid by a third party (for example, by a parent of the user). This feature for example may provide an advantageous parental control and/or monitoring mechanism. Parental pre-payments, for example, may be periodically renewed by agreement via a payment means of the parent (for example, via a standing credit card payment replenishment instruction from the parent).

Figures 6 through 15 provide an exemplary illustration of the deferred payment method as may be implemented in the augmented reality system of the present disclosure. Fig. 6 depicts a representative initial state of the transaction management widget multifunction tool that is produced by the transaction management software module for display in the virtual environment by the HMD worn by a user. The user may advantageously interact with the transaction management widget in accordance with aspects of the deferred payment method of the present disclosure. In Fig. 6, the transaction management widget illustrates no outstanding deferred payments are unsettled ($0.00 balance) by an absence of shading of any portion of an "Omega circle," and optionally by depicted text of "$0.00". The rendered transaction management widget and certain of its various exemplary states will be described in greater detail with respect to an exemplary sequence of transactions by the user illustrated in Figs. 7 through 15.

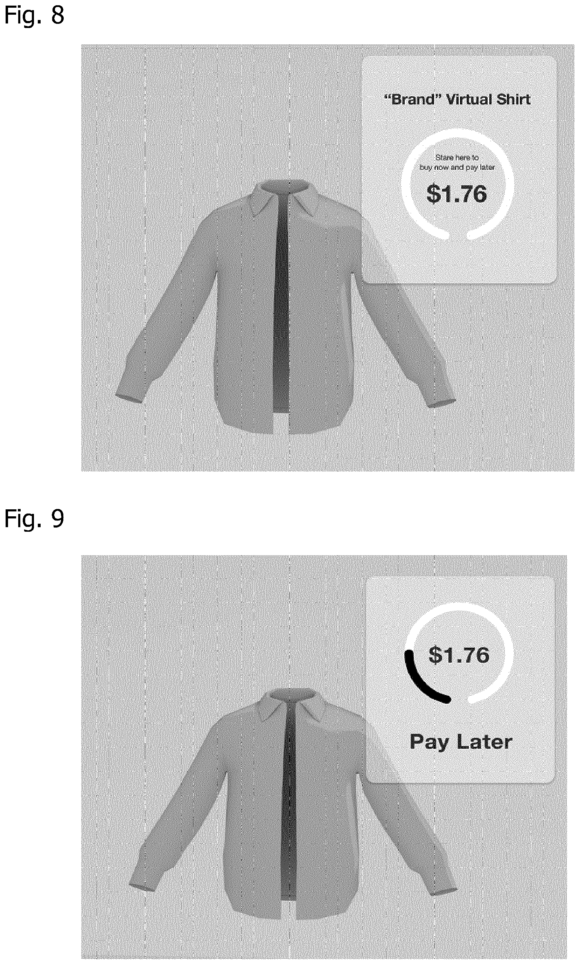

Fig. 7 depicts an exemplary virtual shirt displayed in the virtual environment for use with, for example, an avatar of the user, which may be of interest for a potential transaction, e.g., purchase, license, or rent, by the user. The user may select the displayed virtual shirt using any of a variety of methods including, for example, the aforementioned pointing devices associated with the HMD; hand, finger and/or arm gestures; and/or by detecting a user's gaze that is directed toward the object for at least a predetermined period of time. Upon selecting such shirt for a potential transaction, the transaction management widget will be displayed for viewing in the HMD such as illustrated in Fig. 8. The representative transaction management widget, displayed in Fig. 8 includes the transaction cost of the depicted virtual shirt, i.e., $1.76, with the Omega circle still displaying no outstanding deferred payments are unsettled ($0.00 balance), and optionally, including instructions for confirming the transaction for the virtual shirt.

Then, upon the user interacting with the transaction management widget to confirm the transaction for the virtual shirt, the display of the transaction management widget will be updated as shown in Fig. 9 to depict a confirmed deferred payment obligation for the unsettled transaction amount of the virtual shirt of $1.76, by representing the Omega circle with a representative black portion extending from the left-portion end in a clockwise direction to a point proportionately representing $1.76 of the aggregate total permissible $5.00 of deferred payment obligation.

Detection by the augmented reality system of the user's interaction with the transaction management widget, may be in the form of, for example, the sensors associated with the HMD detecting at least one of a predetermined number of head nods by a user within or outside of a predetermined vertical angle range over at least a predetermined period of time, blinking eyes at least a preset number of times within a predetermined time period, predetermined head motion, hand, finger and/or arm gesture, eye movement, pointing device action, and/or voice command. The user may cancel or undo such potential transaction using other ones of the above referenced exemplary interactions with the transaction management widget not used for confirmation of the transaction.

As an aid to the user's interaction with the transaction management widget, an additional time indicator may preferably be displayed, beginning at the start time of the predetermined time interval, within the user's field of vision. The time indicator may indicate a time progression during the time interval, for example by means of a progress bar, countdown timer, a color coding and/or a clock. Updating of the time indicator according to a progression of time, may preferably be provided by a time unit of the HMD and/or mobile device, which may also preferably be operative to remove the time indicator at the end time of the time interval. The time interval may be preferably set to a predetermined constant value, for example such as 5 seconds.

After the transaction is completed, or alternatively, canceled or undone, the transaction management widget may then disappear after an appropriate or preset period of time, and reappear to the user when such user indicates interest in a subsequent potential transaction, or in a permitted recalling of a deferred payment obligation for a prior transaction. In the alternative, the transaction management widget may not disappear, but be relocated to a region of the displayed virtual environment and/or reduced in size for continuously displaying the current balance of the deferred payment obligation.

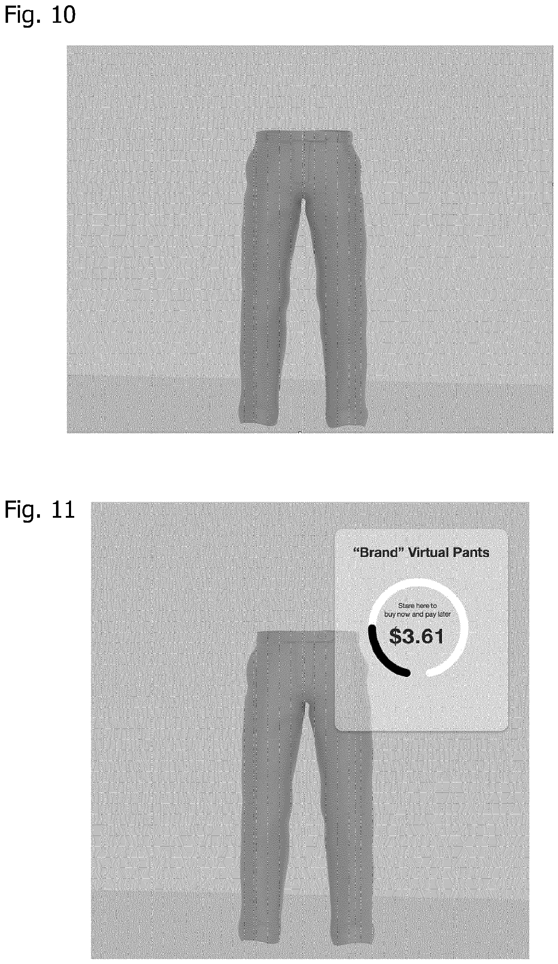

Fig. 10 depicts an exemplary second item, virtual pants, that may be displayed in the virtual environment by the HMD, and which may be of interest to the user for a second potential transaction, e.g., purchase, license, or rent, by the user. The user may select the displayed virtual pant using any of a variety of methods described above with respect to Fig. 7 including, for example, pointing devices associated with the HMD; hand, finger and/or arm gestures; and/or by detecting a user's gaze that is directed toward the object for at least a predetermined period of time. Upon selecting the virtual pants for a potential transaction, the transaction management widget, will be displayed in the virtual environment by the HMD such as illustrated in Fig. 11. The representative transaction management widget displayed in Fig. 11 includes the transaction cost of the depicted virtual pants, i.e., $3.61, with the Omega circle still displaying the balance of $1.76 for the deferred payment obligation by representing the Omega circle with the respective black proportionally indicating such an amount relative to the aggregate maximum permissible deferred payment obligation of $5.00. Also in Fig. 11, the displayed transaction management widget optionally includes instructions for confirming the transaction for the virtual pants.

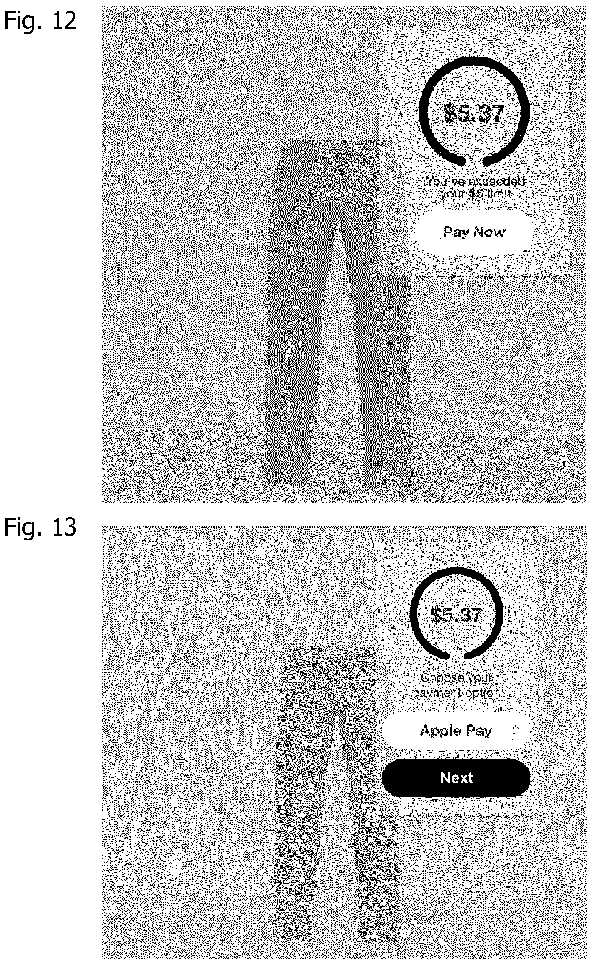

Upon the user interacting with the transaction management widget to confirm the transaction for the virtual pants, the display of the transaction management widget will be updated, as shown in Fig. 12 to depict a deferred payment obligation for the unsettled total aggregate transaction amount of $5.37, i.e., the cumulative transactions amounts owed for the transactions of the virtual shirt and the virtual pants, with the black arc fully extending around the Omega circle. Thus, as illustrated, an overspend of $0.37 beyond that $5.00 threshold has been allowed. Because the unsettled total aggregate transaction amount of $5.37 exceeds the aggregate maximum permissible deferred payment obligation of $5.00, the transaction management widget of Fig. 12 further displays that "You've filled your $5.00", and a selectable option to "Pay Now" to enable the user to easily communicate with the payment system for settlement. If the user does not select the "Pay Now" option or indicate cancelation of the potential transaction, the transaction for virtual pants will not be completed.

Further, to the extent that such deferred payment obligation is not settled, the transaction management widget, and or/the virtual or augmented reality system may preferably provide a visual and/or audio alert to the user that until such payment obligation is settled, the user will not be provided access to the payment system and will be unable to enter transactions for other goods, services, and digital content via any of the augmented- or virtual-reality, or holographic platforms, operating systems or websites supported by such payment system.

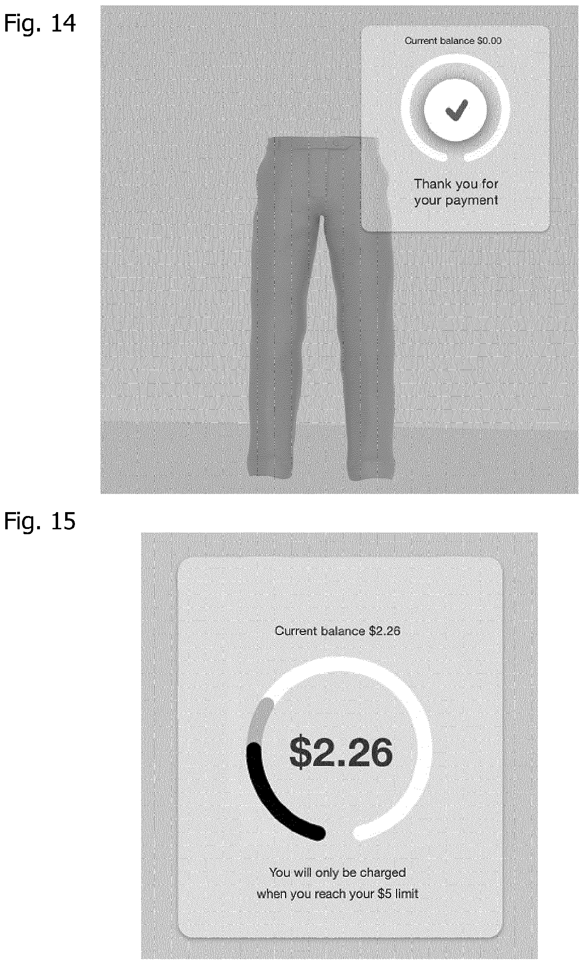

Referring again to Fig. 12, upon the user selecting the selection "Pay Now" option, the exemplary transaction management widget is updated to that shown in Fig. 13 with a representative selectable one or more user interaction options, e.g., "Apple Pay", for settlement. Upon selecting the Apple Pay payment option, the user will be able to pay her/his deferred payment obligation of $5.37. It should be understood that such payment options may include one or more payment options described above including credit card, by Apple Pay (as shown), Google Pay, fiat currency, cryptocurrency, permitting third parties to pay the balance, applying accrued credit against such balance, or via an electronic wallet application activated on suitable device such as an associated mobile device of the user. Once the user has paid the $5.37 payment obligation, the transaction management widget may be updated to reflect or confirm such payment as depicted, for example, in Fig. 14.

The use of the transaction management widget rendered by the transaction management software module in accordance with this disclosure not only enables users to quickly execute transactions with deferred payment, but also may reflect, for example, credit or discount provided to or earned by the user by depicting a corresponding segment of the Omega circle in a different color, pattern or shading, or outline of such segment highlighted in in a different color, pattern or shading. In a similar manner, a voucher provided to or earned by the user, for example, for engaging in an activity in the virtual environment, may be reflected in the Omega circle in a like manner, with or without an indicator regarding the physical or virtual item or service for which such voucher may be used. Such voucher may further reflect without limitation, earned credit and/or discount for a product, video game service, and access to event such as a concert, theatrical play, sports event, museum, gallery, or tour of a physical or virtual museum or zoo. One particular example includes earning such voucher engaging in an activity in the virtual environment for the earned credit or discount useable in the real world for products and/or activities including, for example, receiving a service, or attending a concert, sports event, theatrical play, or tour.

Fig. 15, shows a transaction management widget advantageously depicting an "Omega circle" (representing a $1.76 deferred payment obligation) with a pending deferred payment obligation is indicated by a gray arc extending away from the black arc in a clockwise direction for purchases made offline or during the period of time required for the deferred payment obligation to be accepted for the corresponding confirmed transaction. While the illustrated transaction management widget in the figures is illustrated in the form of an Omega circle and U.S. dollar amounts, these also may be presented with alternate symbols including, for example, indicators of other shapes, such as bar(s) inclined or declined lines, and other currency amounts.

By implementing the advantageous unique virtual transaction management widget multifunction tool and enabling a user to interact with such image indicator in connection with the selection of a real or virtual object in the virtual- or augmented-reality environment for a potential purchase, rental or access transaction, the transaction systems in accordance with this disclosure beneficially enable rapid transactions including confirmation of such transactions have deferred payment obligations with limited user interaction. Such transactions systems and methods therefor are particularly advantageous for micropayment transactions in the virtual environment.

It will be understood that, while various aspects of the present disclosure have been illustrated and described by way of example, the invention described herein is not limited thereto, but may be otherwise variously embodied as suggested by the disclosure and as indicated within the scope of the following exemplary claims. For example, although the disclosure describes the inventive methods of the transaction systems for enabling rapid transactions with deferred payment obligation and limited user interaction with regard to a virtual-reality HMD and system, such inventively may additionally be implemented in an augmented-reality or holographic system, or the like.

### Reference numerals:

- 110: AR device
- 111: display
- 112: eye tracker
- 113: inertial measurement unit
- 120: AR backend
- 130: smart phone
- 140: payment system
- 150: product database
- 200: virtual clothing store
- 210: shirt
- 211, 212: trousers
- 220: shopping cart symbol
- 230: field of view
- 310: first signals
- 315: selection data
- 320: second signals
- 325: reaction data
- 330: pricing data
- 335: payment data
- 410: progress bar
- 420: instruction text field
- 500: user
- S1: initiation step
- S2: first analysis step
- S3: second analysis step
- S4: evaluation step
- S5: data collection step
- S6: data assignment step
- S7: checking step
- S8: payment transmission step
- S9: termination step
- S11: triggering step
- S12a: determination request
- S12b: determination response
- S13a: look-up request
- S13b: look-up response
- S14: transaction step

## Claims

1. A computer-implemented method for enabling purchases related to an augmented reality environment provided by an AR device (110) and/or an AR backend (120), the AR device (110) having at least one display (111) and at least one sensor, preferably an eye tracker (112), position sensor and/or inertial measurement unit (113), the method comprising the steps of:
- visualizing a purchase incentive (220) in the augmented reality environment, in particular by using the display (111);
- obtaining selection data (315) based on first signals (310) from the at least one sensor, the selection data (315) being indicative of an item (210), in particular a virtual content item and/or a real-world item, selected for purchase;
- obtaining reaction data (325) based on second signals (320) from the at least one sensor, the second signals (320) being acquired continuously during a time interval;
- evaluating the reaction data (325) to either confirm or cancel the purchase of the selected item (210);
- assigning pricing data (330) and payment data (335) to the selected item (210), in particular by performing a database look-up;
- if the purchase is confirmed, transmitting pricing data (330) and/or payment data (335) to a payment system (140) to initiate a payment of the selected item (210).

2. The method according to Claim 1, **characterized in that** the purchase is confirmed if at least a part of the reaction data (325) is indicative of
- a user's gaze at a region (230) in the augmented reality environment, preferably indicated by sensor signals of the eye tracker (112);
- a user's position in a region in the augmented reality environment, preferable indicated by sensor signals of the position sensor and/or the inertial measurement unit (113); and/or
- a predetermined number of nods by the user, preferably indicated by sensor signals of the inertial measurement unit (113);

3. The method according to any of the preceding claims, **characterized in that** the purchase is cancelled if at least a part of the reaction data (325) is indicative of a predetermined number of headshakes by the user, preferably indicated by sensor signals of the inertial measurement unit (113).

4. The method according to any of the preceding claims, in particular Claim 2, **characterized in that** the method further comprises the step of
- visualizing a time progression during the time interval in the augmented reality environment, in particular by means of a progress bar (410), countdown timer, a color coding and/or clock.

5. The method according to any of the preceding claims, **characterized in that** the method further comprises:
- storing a start time of the time interval in reaction to or triggered by at least one of the first signals;
- determining an end time of the time interval, preferably such that the difference between the end time and the start time equals a predetermined constant, preferably less than or equal to 5 sec.

6. The method according to any of the preceding claims, in particular Claims 4-5, **characterized in that** visualizing the time progression comprises one or more of the following steps:
- displaying a time indicator at the start time of the time interval, in particular using the display (111);
- updating the time indicator according to a progression of time, preferably provided by a time unit of the AR device (110);
- removing the time indicator at the end time of the time interval.

7. The method according to any of the preceding claims, **characterized in that** the payment system (140) is adapted to perform a payment transaction from a user such that payment is only required if the total cost of an item cost, according to the pricing data (330), and a total of unsettled prior obligations associated with the user exceeds a threshold amount, wherein preferably
a transaction status indicator is displayed in the augmented reality environment, the transaction status indicator indicating at least one of:
- the pricing data (330) of the selected item (210);
- the threshold amount before the payment system (140) requires a payment;
- unsettled prior obligations, if existing.

8. A computer-implemented method, in particular according to any of the preceding claims, for enabling purchases related to an augmented reality environment provided by an AR device (110) and/or an AR backend (120), the AR device (110) having at least one display (111) and at least one sensor, preferably an eye tracker, position sensor and/or inertial measurement unit (113), the method comprising the steps of:
- receiving, by a mobile device (130), a trigger signal, in particular an audio signal, the trigger signal being indicative of a user's purchase intention;
- identifying, by the mobile device (130), at least one item (210) related to the purchase intention, in particular by sending at least one request to the AR device (110) and/or the AR backend (120);
- assigning pricing data (330) and payment data (335) to the identified item (210), in particular by performing a database look-up;
- transmitting, by the mobile device (130), pricing data (330) and/or payment data (335) to a payment system (140) to initiate a payment of the selected item (210).

9. The method according to any of the preceding claims, in particular Claim 8, **characterized in that** the identifying of the at least one item (210) related to the purchase intention comprises:
- sending, by the mobile device (130), a request to the AR device (110) and/or to the AR backend (120), comprising identification data and data related to the purchase intention;
- relating, by the AR device and/or the AR backend, the request to an avatar in the augmented reality environment, the avatar being associated with the identification data;
- determining, by the AR device (110) and/or the AR backend (120), at least one item using (210) the data related to the purchase information and at least one property of the avatar.

10. The method according to any of the preceding claims, in particular Claims 8-9, wherein the at least one property of the avatar corresponds to
- a user's gaze at a region (230) in the augmented reality environment, preferably indicated by sensor signals of an eye tracker; and/or
- a user's position in a region in the augmented reality environment, preferable indicated by sensor signals of the position sensor and/or inertial measurement unit (113).

11. The method according to any of the preceding claims, in particular Claims 8-10, **characterized in that** the method further comprises the step of:
- transmitting description data related to the identified item (210) by the mobile device (130) to the AR device (110);
- visualizing the description data by the AR device (110), in particular by using the display (111);
- evaluating, by the AR device (110), reaction data (325) based on third signals from the at least one sensor to confirm or cancel the purchase of the selected item (210).

12. A computer readable medium storing instructions that when executed by at least one processor cause the at least one processor to implement a method according to any of the preceding claims.

13. An AR device (110) comprising a computer readable medium according to Claim 12.

14. A system for enabling purchases related to an augmented reality environment, the system comprising:
- an AR device (110) having at least one display (111) and at least one sensor, preferably an eye tracker (112), position sensor and/or inertial measurement unit (113);
- an AR backend (120);
- at least one payment system (140),
wherein an augmented reality environment is provided by the AR device (110) and/or the AR backend (120), wherein the AR device (110) is configured to visualize a purchase incentive; in particular by using the display (111), in the augmented reality environment and the AR backend (120) is configured to at least one of the following:
- obtaining selection data (315) based on first signals (310) from the at least one sensor, the selection data (315) being indicative of an item (210) selected for purchase;
- obtaining reaction data (325) based on second signals (320) from the at least one sensor, the second signals (320) being acquired continuously during a time interval;
- evaluating the reaction data (325) to either confirm or cancel the purchase of the selected item (210);
- assigning pricing data (330) and payment data (335) to the selected item (210), in particular by performing a database look-up;
- if the purchase is confirmed, transmitting pricing data (330) and/or payment data (335) to a payment system (140) to initiate a payment of the selected item (210).

15. The system according to Claim 14, **characterized in that** the system further comprises a mobile device (130), in particular a smartphone or a smart speaker, configured to at least one of the following:
- receiving a trigger signal, in particular a voice signal, the trigger signal being indicative of a user's purchase intention;
- identifying at least one item (210) related to the purchase intention, in particular by sending at least one request to the AR device (110) and/or the AR backend (120);
- assigning pricing data (330) and payment data (335) to the identified item (210), in particular by performing a database look-up;
- transmitting pricing data (330) and/or payment data (335) to a payment system (140) to initiate a payment of the selected item (210).
